# EUROPEAN PATENT SPECIFICATION

(11) **EP 4 137 646 B1**
(45) Date of publication and mention of the grant of the patent: **02.12.2026**
(21) Application number: 22189912.3
(22) Date of filing: 11.08.2022
(51) Int. Cl.: E03C 1/12, B64D 11/02, E03F 1/00

(54) **ULTRASONIC SENSOR BASED DRAIN SYSTEMS**
ULTRASCHALLSENSORBASIERTE ABLAUFSYSTEME
SYSTÈMES DE DRAINAGE BASÉS SUR UN CAPTEUR À ULTRASONS

(30) Priority: 18.08.2021 IN 202141037466; 15.10.2021 US 202117503134
(43) Date of publication of application: 22.02.2023
(73) Proprietor: B/E Aerospace, Inc., Winston-Salem, NC 27105 (US)
(72) Inventor: DAKSHINAMURTHY, Mohan Raj, Bangalore (IN); PATIL, Rhushikesh, Bangalore (IN)
(74) Representative: Dehns

(56) References cited:
- CN-A- 109 629 641
- CN-U- 202 081 500
- CN-U- 213 926 540
- JP-A- 2001 271 394
- JP-A- H09 125 482
- ANONYMOUS: "Ultrasonic flow meter - Wikipedia", 24 February 2021 (2021-02-24), XP093006121, Retrieved from the Internet <URL:https://web.archive.org/web/20210224194721/https://en.wikipedia.org/wiki/Ultrasonic_flow_meter> [retrieved on 20221208]

## Description

### TECHNICAL FIELD

The present disclosure relates to drain systems for improved water detection and, more particularly, improved waste water detection systems and methods for use in aircraft lavatories.

### BACKGROUND

Aircraft cabins include lavatories having drain systems disposed therein. The waste water drain system may use a complex, highly customized drain valve, which may be complex, difficult to manufacture, and costly. Typical waste water drain systems include differential diaphragm based drain valves, which are complex and use pressure differential between sides of a diaphragm to activate the system. Typical waste water drain systems use three different pressure parameters: aircraft cabin pressure, water pressure, and external ambient air pressure.

JP 2001271394 A describes a concentrated toilet system, wherein a plurality of toilets are connected to a common drainpipe unit and the quantity of water required for the toilets, which is needed for making filth flow down from the toilets to a prescribed position of the drainpipe unit, is determined for each toilet according to the position of disposition thereof, while measures are taken for the toilets so that the quantity of water required therefore be obtained.

CN109629641 A describes a sewage lifter with a deodorization structure and a control method.

CN 202081500 U describes an electric floor drain for a clean air conditioning room. The electric floor drain comprises a drain pipe, a U-shaped trap, a water outlet pipe, an electromagnetic water valve, a controller, a handle type flow sensor, a floor drain vertical pipe, a floor drain conical wall and a floor drain support grid.

CN 213926540 U describes an air pressure adjusting drainage device comprising a water inlet pipe, a U-shaped pipe, a connecting pipe, a branch pipe and a water outlet pipe, the bottom end of a second pipe body is communicated with one end, far away from a first pipe body, of the U-shaped pipe.

JP H09 125482 A describes a control valve at a connection part of a drain vertical pipe and a cleaning water pipe, a controller is actuated and the motor- driven control valve is opened at a timing preset in a computer to inject the cleaning water from the cleaning water pipe into the drain vertical pipe.

### SUMMARY

According to an aspect of the disclosure, there is provided a plumbing system as recited in claim 1.

In various embodiments, the plumbing system may further comprise a second ultrasonic flow sensor coupled to the fluid conduit upstream of the first ultrasonic flow sensor. The controller may further be configured to: receive a first transit time from the first ultrasonic flow sensor to the second ultrasonic flow sensor, receive, a second transit time from the second ultrasonic flow sensor to the first ultrasonic flow sensor, and calculate a difference in transit time between the first transit time and the second transit time. The controller may further be configured to: determine whether a fluid is flowing through the fluid conduit based on the difference in transit time, and activate the valve in response to determining the fluid is flowing through the fluid conduit. The plumbing system may further comprise a holding tank and a second fluid conduit, the holding tank coupled to an outlet of the fluid conduit, the second fluid conduit extending from the holding tank to the valve. The controller may further be configured to: determine a volume of waste water disposed in the holding tank, and activate the valve in response to determining the volume of waste water exceeds a volume threshold. The controller may be further configured to: receive a frequency of an ultrasonic beam transmitted from the first ultrasonic flow sensor, determine a fluid is flowing through the fluid conduit in response to a shift in the frequency of the ultrasonic beam, and activate the valve in response to determining the fluid is flowing through the fluid conduit. The plumbing system may further comprise a holding tank and a second fluid conduit, the holding tank coupled to an outlet of the fluid conduit, the second fluid conduit extending from the holding tank to the valve. The controller may be further configured to: determine a volume of waste water disposed in the holding tank, and activate the valve in response to determining the volume of waste water exceeds a volume threshold.

According to an aspect of the disclosure, there is provided an article of manufacture as recited in claim 8.

In various embodiments, the operations further comprise determining, via the processor, a volume of fluid disposed in a holding tank based on the sensor data, wherein activating the valve further comprises activating the valve in response to determining, via the processor, a volume of the fluid in the holding tank exceeds a volume threshold, and wherein, the fluid is a waste water to be disposed or drained.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 illustrates a perspective view of a lavatory for an aircraft, in accordance with various embodiments;
FIG. 2 illustrates a schematic view of a plumbing system, in accordance with various embodiments;
FIG. 3 illustrates sensors coupled to a conduit of a plumbing system, in accordance with various embodiments;
FIG. 4 illustrates sensors coupled to a conduit of a plumbing system, in accordance with various embodiments;
FIG. 5 illustrates a control system for a plumbing system, in accordance with various embodiments;
FIG. 6 illustrates a process operated by a control system for a plumbing system, in accordance with various embodiments;
FIG. 7 illustrates a control system for a plumbing system, in accordance with various embodiments;
FIG. 8 illustrates a process operated by a control system for a plumbing system, in accordance with various embodiments;
FIG. 9 illustrates a schematic view of a plumbing system, in accordance with various embodiments;
FIG. 10 illustrates a process for a control system of a plumbing system, in accordance with various embodiments; and
FIG. 11 illustrates a process for a control system of a plumbing system, in accordance with various embodiments.

### DETAILED DESCRIPTION

The detailed description of exemplary embodiments herein makes reference to the accompanying drawings, which show exemplary embodiments by way of illustration and their best mode. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Disclosed herein is waste water detection systems and method for use in aircrafts. The waste water system may comprise an ultrasonic flow sensor or the like. In this regard, the ultrasonic flow sensor may be coupled to a fluid conduit and configured to detect flow within the fluid conduit as described further herein. In various embodiments, the waste water system may further comprise a controller in operable communication with the ultrasonic flow sensor. In this regard, the controller may be configured to perform a respective action in response to data provided by the ultrasonic flow sensor, as described further herein.

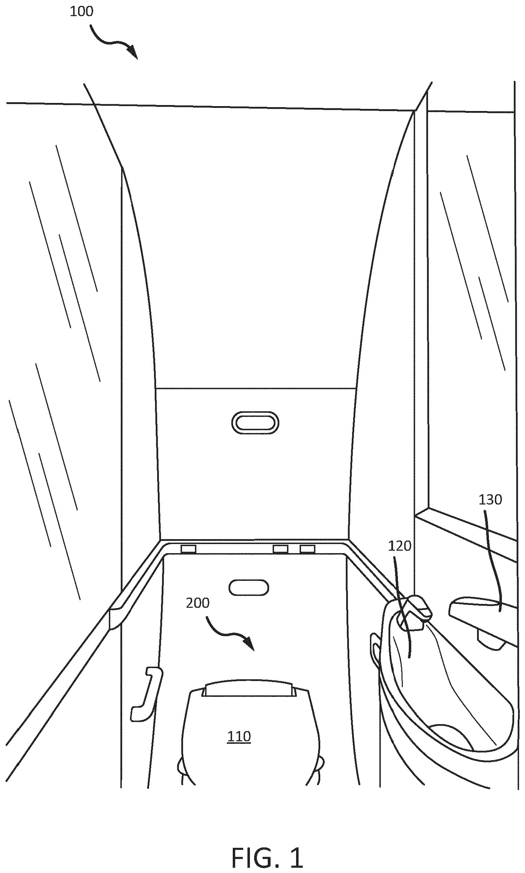

Referring now to FIG. 1, a perspective view of a lavatory 100 of an aircraft is illustrated in accordance with various embodiments. The lavatory 100 comprises a toilet 110, a water basin 120 (e.g., a sink), and a faucet 130. In various embodiments, the lavatory 100 further comprises a plumbing system 200. The plumbing system 200 is in fluid communication with the toilet 110, the water basin 120, and the faucet 130. In this regard, in response to flushing the toilet 110, waste water may be transferred throughout the plumbing system 200 as described further herein. Similarly, in response to running water via the faucet 130, waste water may be transferred throughout the plumbing system 200 as described further herein.

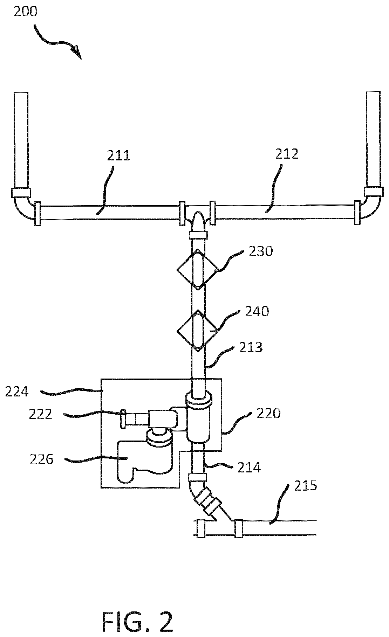

Referring now to FIG. 2, a front view of the plumbing system 200 from the lavatory 100 of the aircraft of FIG. 1 is illustrated, in accordance with various embodiments. In various embodiments, the plumbing system 200 comprises a first fluid conduit 211 and a second fluid conduit 212. The first fluid conduit 211 may be in fluid communication with a first waste water supply (e.g., a toilet 110 or a water basin 120 from FIG. 1). Similarly, the second fluid conduit 212 may be in fluid communication with a second waste water supply (e.g., a toilet 110 or a water basin 120 from FIG. 1). Although illustrated as only including two supply fluid conduits (e.g., fluid conduits 211, 212), the present disclosure is not limited in this regard. For example, a plurality of supply fluid conduits is within the scope of this disclosure (e.g., for multiple lavatories or the like), in accordance with various embodiments. In various embodiments, a plumbing system 200 may be utilized for each lavatory in an aircraft and include an drain fluid conduit 215 where all of the waste water on the aircraft is configured to exit. The present disclosure is not limited in this regard.

In various embodiments, the supply fluid conduits (e.g., fluid conduits 211, 212) converge on a common drain conduit (e.g., third fluid conduit 213). In this regard all waste water may be drained through the third fluid conduit 213, in accordance with various embodiments. In various embodiments, the plumbing system 200 further comprises a valve assembly 220, a first ultrasonic flow sensor 230, and a second ultrasonic flow sensor 240. The first ultrasonic flow sensor 230 and the second ultrasonic flow sensor 240 are coupled to the fluid conduit 213 as described further herein. In various embodiments, the third fluid conduit 213 extends from an intersection of the supply fluid conduits (e.g., fluid conduits 211, 212) to an inlet of the valve assembly 220. In various embodiments, a fourth fluid outlet extends from an outlet of the valve assembly 220 to an intersection in fluid communication with the drain fluid conduit 215.

In various embodiments, the valve assembly 220 comprises a housing 224, a valve 222, and an electrical input 226. In various embodiments, the electrical input 226 includes a circuit board assembly (CCA) or a printed circuit board assembly (PCBA). The present disclosure is not limited in this regard. The electrical input 226 may be configured as a local controller for the valve 222. In various embodiments, the controller may communicate directly with the valve 222. The present disclosure is not limited in this regard. In various embodiments, the valve 222 is a solenoid valve. In various embodiments, the valve assembly 220 may be manufacture by any method known in the art. For example, the valve assembly 220 may be additively manufactured, in accordance with various embodiments.

In various embodiments, the first ultrasonic flow sensor 230 and the second ultrasonic flow sensor 240 are transit time transducers. In this regard, the first ultrasonic flow sensor 230 and the second ultrasonic flow sensor 240 may each comprise a transceiver as described further herein.

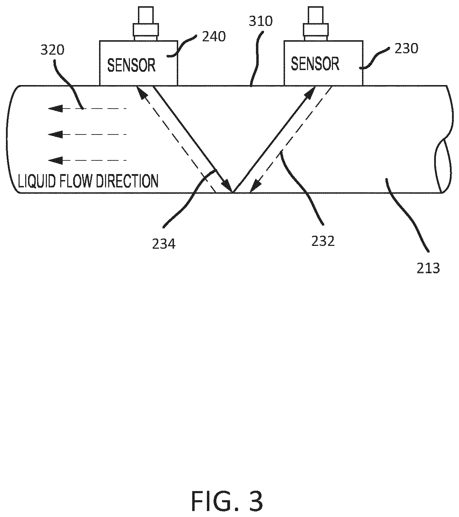

Referring now to FIG. 3, a cross-sectional schematic view of the first ultrasonic flow sensor 230, the second ultrasonic flow sensor 240, and the fluid conduit 213 is illustrated in use, in accordance with various embodiments. In various embodiments the first ultrasonic flow sensor 230 is coupled externally to the fluid conduit 213 upstream of the second ultrasonic flow sensor 240. The ultrasonic flow sensors 230, 240 may be coupled to the fluid conduit 213 by any method, such as a clamp, a strap, or the like. In various embodiments, ultrasonic flow sensors 230, 240 are configured to transmit an ultrasonic signal through a wall 310 of the fluid conduit 213 internally into the fluid conduit 213. The transmitted ultrasonic signal may bounce off a radially inner surface of the wall 310 back towards the other sensor (e.g., first ultrasonic flow sensor 230 in response to second ultrasonic flow sensor 240 transmitting the signal and/or second ultrasonic flow sensor 240 in response to the first ultrasonic flow sensor 230). For example, the first ultrasonic flow sensor 230 is configured to generate a first ultrasonic signal 232 towards the second ultrasonic flow sensor 240 (i.e., in sync with a direction of fluid flow 320), which is configured to be received by the second ultrasonic flow sensor 240. Similarly, the second ultrasonic flow sensor 240 is configured to generate a second ultrasonic signal 242 towards the first ultrasonic flow sensor 230 (i.e., against the direction of fluid flow 320), which is configured to be received by the first ultrasonic flow sensor 230. In various embodiments, the ultrasonic signals 232, 242 may be sound waves beyond the range of hearing (e.g., between 0.5 and 4 MHz or the like).

In various embodiments, the ultrasonic flow sensors 230, 240 are configured to send the transit time of the first ultrasonic flow sensor 230 and the second ultrasonic flow sensor 240 to a controller as described further herein. In this regard, the controller may utilize the transit time data as described further herein. In various embodiments, the transit time may be compared by the controller and used by the controller to detect flow, or presence of a liquid flowing through the fluid conduit 213 as described further herein. In various embodiments a difference in transit time may be utilized by the controller to calculate an average velocity of the fluid flowing through the fluid conduit 213. The average velocity may be utilized by a controller to determine a volumetric flow rate and/or a volume of water dispensed throughout a flight cycle. In this regard water usage of future flight cycles may be optimized, reducing costs associated with water usage over time, in accordance with various embodiments.

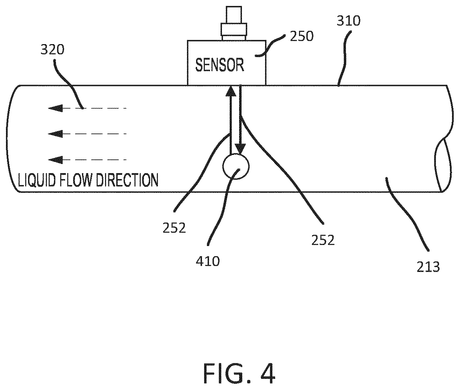

Although illustrated as comprising a first ultrasonic flow sensor 230 and a second ultrasonic flow sensor 240, the present disclosure is not limited in this regard. For example, with reference now to FIG. 4, a single ultrasonic flow sensor (e.g. ultrasonic flow sensor 250) may be coupled to the fluid conduit 213 of FIG. 2, in accordance with various embodiments. In various embodiments, the ultrasonic flow sensor 250 may be a Doppler Effect transducer. In this regard, the ultrasonic flow sensor 250 is configured to emit an ultrasonic beam 252 into a fluid flowing through the fluid conduit 213. In various embodiments, for ultrasonic flow sensor 250 to operate, solid particles or air bubbles 410 must be disposed in the fluid flow to reflect the ultrasonic beam 252. In contrast, the ultrasonic flow sensors 230, 240 from FIG. 3 operate more efficiently with minimal solids or air bubbles 410. Thus, the configuration of FIG. 4 may be utilized in applications where solids and air bubbles 410 are present in little to no concentration, whereas the ultrasonic flow sensor 250 may be utilized in applications where a greater concentration of solids or air bubbles 410 are expected, in accordance with various embodiments.

In various embodiments, utilizing ultrasonic flow sensors 230, 240 from FIG. 3 that is configured for transit time measurements may include no moving parts, provide relatively high accuracy, long operational life, detect a variety of materials, and/or provide resistance to vibration from infrared radiation, in accordance with various embodiments. In various embodiments, utilizing the ultrasonic flow sensor 250 from FIG. 4 provides enhanced corrosion resistance and/or provides less power consumption relative to typical systems, in accordance with various embodiments.

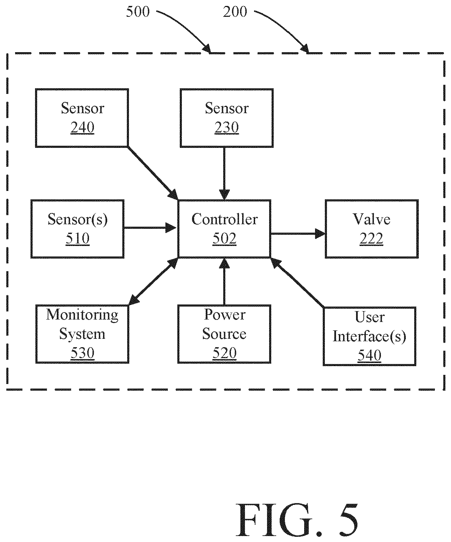

Referring now to FIG. 5, a schematic view of a control system 500 for a plumbing system 200 from FIG. 2 with the ultrasonic flow sensors 230, 240 from FIG. 3 is illustrated in accordance with various embodiments. In various embodiments, the control system 500 comprises a controller 502. In various embodiments, controller 502 may be integrated into computer system of the aircraft. In various embodiments, controller 502 may be configured as a central network element or hub to access various systems and components of control system 500. Controller 502 may comprise a network, computer-based system, and/or software components configured to provide an access point to various systems and components of control system 500. In various embodiments, controller 502 may comprise a processor. In various embodiments, controller 502 may be implemented in a single processor. In various embodiments, controller 502 may be implemented as and may include one or more processors and/or one or more tangible, non-transitory memories and be capable of implementing logic. Each processor can be a general purpose processor, a digital signal processor (DSP), an application specific integrated circuit (ASIC), a field programable gate array (FPGA) or other programable logic device, discrete gate or transistor logic, discrete hardware components, or any combination thereof. Controller 502 may comprise a processor configured to implement various logical operations in response to execution of instructions, for example, instructions stored on a non-transitory, tangible, computer-readable medium configured to communicate with controller 502.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in In Re Nuijten to fall outside the scope of patentable subject matter under 35 U.S.C. § 101.

In various embodiments, the control system 500 further comprises the ultrasonic flow sensors 230, 240, sensor 510, a monitoring system 530, a power source 520, a user interface(s) 540, and the valve 222 from plumbing system 200 of FIG. 2. In various embodiments, sensor 510 may comprise pressure sensors configured to measure a cabin pressure. Although described as including a pressure sensor, any sensor configured to contribute to a fluid detection system of plumbing system 200 is within the scope of this disclosure. In various embodiments, the controller 502 is in electronic (i.e., electrical or wireless) communication with the ultrasonic flow sensors 230, 240, the sensor 510, the monitoring system 530, the power source 520, the user interface(s) 540, and the valve 222.

In various embodiments, the monitoring system 530 includes a controller or the like configured to provide a status to an aircraft system (e.g., in a cockpit or the like). In this regard, the monitoring system 530 may be configured to monitor drain data from the ultrasonic flow sensors 230, 240, as well as provide an aircraft status to the controller 502 as to whether the aircraft is in flight or on ground, in accordance with various embodiments.

In various embodiments, the user interface(s) 540 may be configured to facilitate activation of valve 222 in response to a user input. In this regard, the user interface(s) 540 may be configured to receive a user input to control activation of valve 222 from a cabin of the aircraft to drain water in the plumbing system 200 or from external to the aircraft to drain water from the plumbing system 200.

The process 600 further comprises receiving, via the controller 502, a second transit time from the second ultrasonic flow sensor 240 to the first ultrasonic flow sensor 230 (step 604). The process 600 further comprises calculating, via the controller, a difference in transit time between the first transit time and the second transit time (step 206).

In various embodiments, the process 600 further comprises determining, via the controller 502, whether a fluid is flowing through a fluid conduit (e.g., fluid conduit 213) based on the difference in transit time (step 608). In various embodiments, in response to the controller 502 determining the first transit time and the second transit time are approximately equal (i.e., within a predetermined error percentage), the controller 502 may perform no further action. In this regard, in response to the first transit time and the second transit time being approximately equal, the controller 502 may determine that no fluid is flowing through the fluid conduit (e.g., fluid conduit 213 from FIGs. 2 and 3).

In various embodiments, in response to the controller 502 determining a non-zero difference (i.e., the first transit time is different from the second transit time), the controller 502 may determine that a waste water is flowing through the fluid conduit (e.g., the fluid conduit 213 from FIGs. 2 and 3). In various embodiments, a non-zero difference as described herein refers to a difference outside of the predetermined error percentage outlined above. The predetermined error percentage may be a design constraint that may be readily apparent to one skilled in the art. The present disclosure is not limited in this regard.

In various embodiments, the process 600 of control system 500 is configured to drain a waste water for every time waste water is traveling through the fluid conduit (e.g., fluid conduit 213). In this regard, the valve 222 is activated (i.e., energized), causing the valve 222 to transition from a closed state to an open state to allow the fluid to pass through the valve 222 and out the drain fluid conduit 215 from FIG. 2, in accordance with various embodiments.

In various embodiments, the process 600 further comprises activating, via the controller 502, the valve 222 in response to determining the fluid is flowing through the fluid conduit (step 610). In various embodiments, the control system 500 and the process 600 may provide a more robust and exhaustive drain system relative to drain systems for aircraft in accordance with various embodiments. In various embodiments, input from the sensor 510 may allow the controller 502 to determine whether the aircraft is in flight or on the ground. In various embodiments, the process 600 may open the valve 222 in response to detecting waste water regardless of whether the aircraft is on ground or in flight.

In various embodiments, the plumbing system 200 may be configured to facilitate opening of the valve 222 by a user input (e.g., via user interface(s) 540). In this regard, during an emergency condition, a user may provide an input (e.g., via knob, a display device, a switch, a button, etc.) received by controller 502, and the controller 502 may command opening of the valve 222, in accordance with various embodiments.

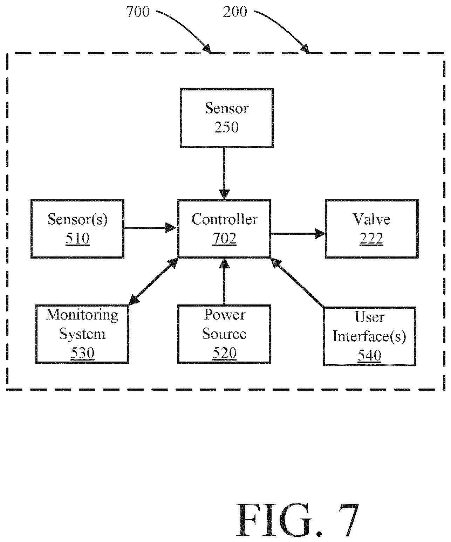

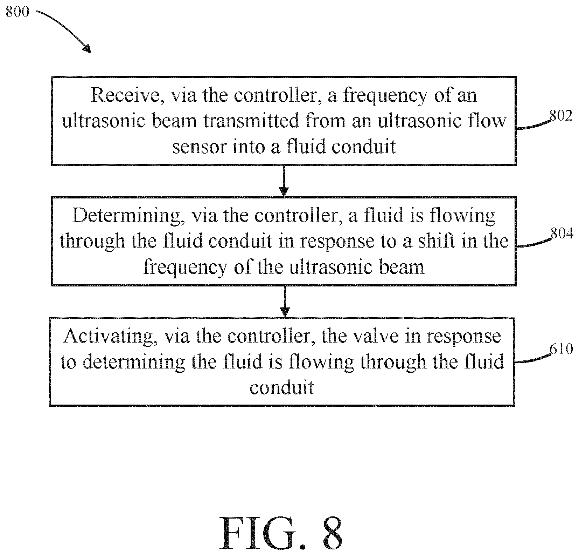

Referring now to FIG. 7, a schematic view of a control system 700 of the plumbing system 200 with the ultrasonic flow sensor 250 is illustrated, in accordance with various embodiments. In various embodiments, the control system 700 comprises a controller 702. The controller 702 is in accordance with the controller 502, except as otherwise described herein (i.e., with respect to process 800 from FIG. 8). Similarly, in various embodiments, the control system 700 is in accordance with control system 500, where like numerals denote like elements of control system 500, except as otherwise described herein.

Referring now to FIG. 8, a process 800 for control system 700 of plumbing system 200 of FIG 5 is illustrated, in accordance with various embodiments. With combined reference to FIGs. 7 and 8, the process 800 comprises receiving, via the controller 702 a frequency measurement of an ultrasonic beam transmitted from an ultrasonic flow sensor 250 into a fluid conduit (e.g., fluid conduit 213 from FIGs. 2 and 4) (step 802).

The process 800 further comprises determining, via the controller 702, a fluid is flowing through the fluid conduit (e.g., fluid conduit 213 from FIGs. 2 and 4) in response to a shift in the frequency of the ultrasonic beam. In order for the ultrasonic flow sensor 250 to operate, solid particles or air bubbles 410 are present in the fluid to reflect the ultrasonic beam. The motion of particles changes the frequency of the ultrasonic beam as measured by a receiver in the ultrasonic flow sensor 250, providing an indication to the controller 702 that fluid is flowing through the fluid conduit (e.g., fluid conduit 213 from FIGs. 2 and 4).

In various embodiments, the frequency shift measured by the ultrasonic flow sensor 250 may be linearly proportional to a flow rate of the fluid. In this regard, the controller 702 may further be configured to calculate a volumetric flow rate by multiplying the flow rate by the internal diameter of the fluid conduit (e.g., fluid conduit 213 from FIGs. 2 and 4). In this regard, a volume of waste water drained during an aircraft flight cycle, or the like may be provided to the monitoring system 530. Thus, the volume of waste water for various flight cycles may be used for optimization of water quantity dispensed through flow control taps and dispensers of future plumbing systems based on data provided by the ultrasonic flow sensor 250, in accordance with various embodiments. In this regard, water usage may be optimized on future aircraft flights reducing costs associated with water usage, in accordance with various embodiments.

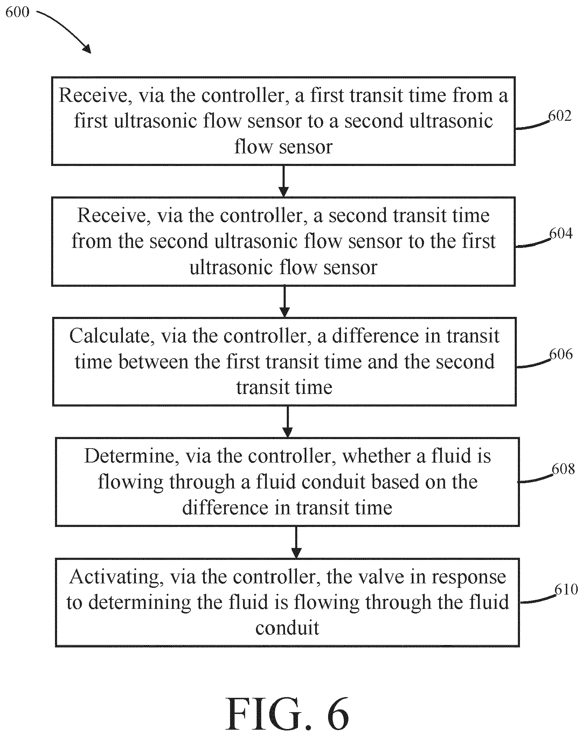

In various embodiments, the process 800 further comprises activating, via the controller 702, the valve 222 in response to determining the fluid is flowing through the conduit (step 610). In this regard, process 800 results in draining a fluid flowing through the fluid conduit (e.g., fluid conduit 213 from FIGs. 2 and 4) in response to detecting the fluid flow in a manner similar to the process 600 from FIG. 6.

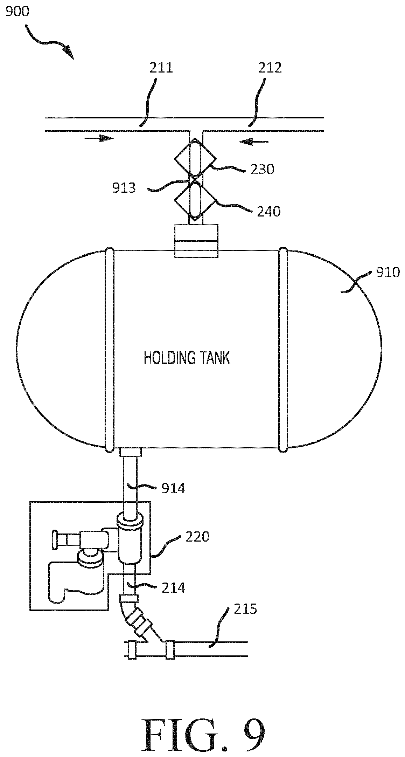

Referring now to FIG. 9, a front view of a plumbing system 900 is illustrated, in accordance with various embodiments. The plumbing system 900 is in accordance with the plumbing system 200, where like numerals denote like elements, in accordance with various embodiments. The elements similar to the plumbing system 200 will not be repeated for sake of brevity. In various embodiments, a holding tank 910 may be disposed between an inlet fluid conduit 913 and an outlet fluid conduit 914 configured to replace third fluid conduit 213 of the plumbing system 200 from FIG. 2. In this regard, the holding tank 910 may be configured to hold a predetermined volume of water, as calculated by a controller based on measurements from the ultrasonic flow sensors 230, 240 prior to draining the predetermined volume of water by opening the valve 222 of the valve assembly 220, in accordance with various embodiments as described further herein.

In various embodiments, the ultrasonic flow sensors 230, 240 are coupled to the fluid conduit 913 in a similar manner to the ultrasonic flow sensors 230, 240 being coupled to the fluid conduit 213 from FIG. 3. Although illustrated as comprising the ultrasonic flow sensors 230, 240, the present disclosure is not limited in this regard. For example, the ultrasonic flow sensor 250 from FIG. 4 may be coupled to the fluid conduit 913, in accordance with various embodiments. In this regard, the plumbing system 900 may be configured for use with ultrasonic flow sensors 230, 240 or for use with ultrasonic flow sensor 250, in accordance with various embodiments.

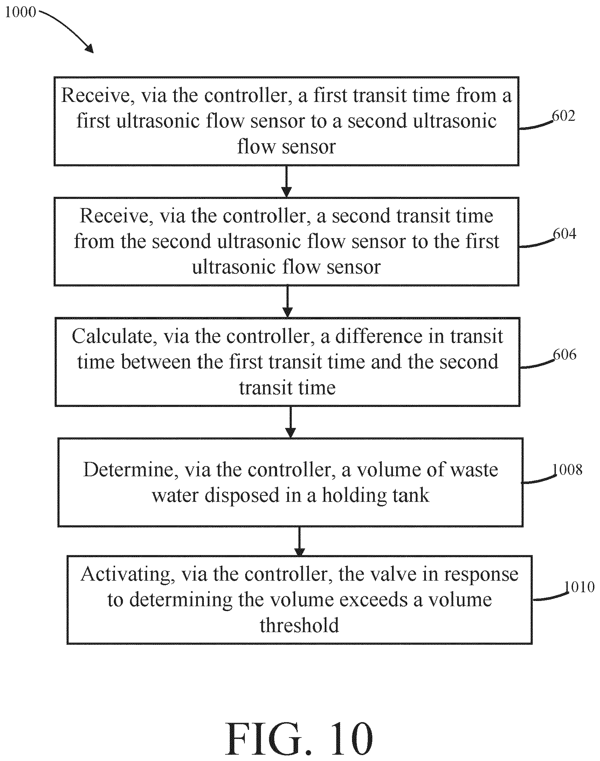

Referring now to FIG. 10, a process 1000 for using plumbing system 900 of FIG. 9 with a control system 500 of FIG. 5 is illustrated, in accordance with various embodiments. In various embodiments, the process comprises steps 602, 604, 606 of process 600 from FIG. 6. In this regard, the controller 502 of FIG. 5 may be configured to continuously calculate a difference in transit time between the first transit time and the second transit time of the ultrasonic flow sensors 230, 240 from FIG. 9 to calculate a volume of waste water disposed in the holding tank 910 from FIG. 9 at a given point in time. In this regard, the process 1000 may further comprise determining, via the controller 502, a volume of waste water disposed in the holding tank 910 from FIG. 9 (step 1008), and activate, via the controller 502, the valve 222 of FIG. 9 in response to determining the volume exceeds a volume threshold for the holding tank 910 from FIG. 9, in accordance with various embodiments.

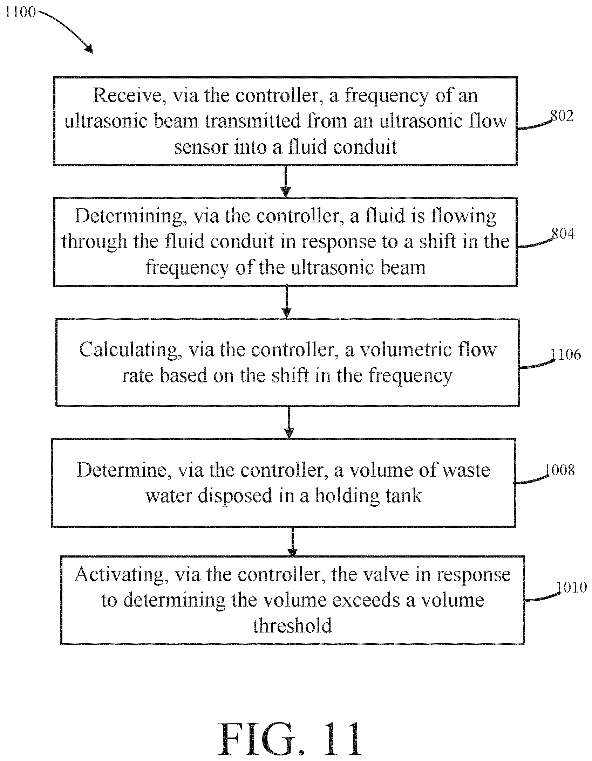

Referring now to FIG. 11, a process 1100 for using plumbing system 900 of FIG. 9 with a control system 700 of FIG. 7 with the ultrasonic flow sensor 250 of FIG. 4 is illustrated, in accordance with various embodiments. In various embodiments, the process comprises steps 802, 804 of process 800 from FIG. 8.0 In this regard, the controller 702 of FIG. 7 may be configured to continuously receive the shift in frequency of the ultrasonic beam and utilize the data as described further herein. In this regard, the process 1100 may further comprise calculating, via the controller 702, a volumetric flow rate based on the shift in the frequency (step 1106). The volumetric flow rate may be calculated as described previously herein. In various embodiments, the process 1100 further comprises steps 1008, 1010 of process 1000 from FIG. 10. In this regard, in a similar manner to process 1000, the controller 702 may determine a volume of waste water disposed in the holding tank 910 from FIG. 9 (step 1008), and activate, via the controller 702), the valve 222 in response to determining the volume exceeds a volume threshold (step 1010), in accordance with various embodiments.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A plumbing system (200; 900), comprising:
a fluid conduit (213; 913) configured to receive waste water;
a first flow sensor (230) coupled to the fluid conduit (213; 913);
a valve (222) in fluid communication with a drain conduit (215), the valve (222) configured to impede a fluid path of the plumbing system (200; 900) in response to being in a closed state; and
a controller (502; 702) electronically coupled to the first flow sensor (230) and the valve (222), the controller (502; 702) configured to:
determine fluid is flowing through the fluid conduit (213; 913) in response to receiving a sensor data from the first flow sensor (230);
activate the valve (222) based on the sensor data;
**characterised in that** the controller (502; 702) is configured to calculate a volume of fluid flowing through the fluid conduit (213; 913) per flight cycle based on the volumetric flow rate; and
determine a second volume of fluid to be dispensed in future flight cycles based on the second volume of fluid,
wherein the first flow sensor (230) is an ultrasonic flow sensor.

2. The plumbing system (200; 900) of claim 1, further comprising a second ultrasonic flow sensor coupled to the fluid conduit (213; 913) upstream of the first ultrasonic flow sensor (230).

3. The plumbing system (200; 900) of claim 2, wherein the controller (502; 702) is further configured to:
receive a first transit time from the first ultrasonic flow sensor (230) to the second ultrasonic flow sensor,
receive, a second transit time from the second ultrasonic flow sensor to the first ultrasonic flow sensor (230), and
calculate a difference in transit time between the first transit time and the second transit time.

4. The plumbing system (200; 900) of claim 3, wherein the controller (502; 702) is further configured to:
determine whether a fluid is flowing through the fluid conduit (213; 913) based on the difference in transit time, and
activate the valve (222) in response to determining the fluid is flowing through the fluid conduit (213; 913).

5. The plumbing system (200; 900) of any preceding claim, further comprising a holding tank (910) and a second fluid conduit, the holding tank (910) coupled to an outlet of the fluid conduit (213; 913), the second fluid conduit extending from the holding tank (910) to the valve (222).

6. The plumbing system (200; 900) of claim 5, when dependent on any of claims 1 to 3, wherein the controller (502; 702) is further configured to:
determine a volume of waste water disposed in the holding tank (910), and
activate the valve (222) in response to determining the volume of waste water exceeds a volume threshold.

7. The plumbing system (200; 900) of any preceding claim, wherein the controller (502; 702) is configured to:
receive a frequency of an ultrasonic beam transmitted from the first ultrasonic flow sensor (230),
determine a fluid is flowing through the fluid conduit (213; 913) in response to a shift in the frequency of the ultrasonic beam, and
activate the valve (222) in response to determining the fluid is flowing through the fluid conduit (213; 913).

8. An article of manufacture including a tangible, non-transitory computer-readable storage medium having instructions stored thereon that, in response to execution by a processor, cause the processor to perform operations comprising:
receiving, via the processor, a sensor data from an flow sensor (230) coupled to a fluid conduit (213; 913);
determining, via the processor, a fluid is flowing through the fluid conduit (213; 913) based at least in part on the sensor data from the flow sensor (230);
calculating, via the processor, a volumetric flow rate based on the sensor data, and
activating, via the processor, a valve (222) based on the sensor data;
**characterised by** calculating, via the processor, a volume of fluid flowing through the fluid conduit (213; 913) per flight cycle based on the volumetric flow rate, and
determining a second volume of fluid to be dispensed in future flight cycles based on the second volume of fluid, and
wherein the flow sensor (230) is an ultrasonic flow sensor.

9. The article of manufacture of claim 8, wherein the operations further comprise determining, via the processor, a volume of fluid disposed in a holding tank (910) based on the sensor data, wherein activating the valve (222) further comprises activating the valve (222) in response to determining, via the processor, a volume of the fluid in the holding tank (910) exceeds a volume threshold, and wherein, the fluid is a wastewater.

## Patentansprüche

1. Ein Rohrleitungssystem (200; 900), umfassend:
eine Fluidleitung (213; 913), die zur Aufnahme von Abwasser ausgebildet ist;
einen ersten Durchflusssensor (230), der mit der Fluidleitung (213; 913) gekoppelt ist;
ein Ventil (222) in Fluidverbindung mit einer Ablaufleitung (215), wobei das Ventil (222) ausgebildet ist, einen Fluidweg des Rohrleitungssystems (200; 900) zu blockieren, wenn es sich in einem geschlossenen Zustand befindet; und
eine Steuerung (502; 702), die elektronisch mit dem ersten Durchflusssensor (230) und dem Ventil (222) gekoppelt ist, wobei die Steuerung (502; 702) ausgebildet ist zum:
Bestimmen, dass Fluid durch die Fluidleitung (213; 913) fließt, als Antwort auf den Empfang von Sensordaten von dem ersten Durchflusssensor (230);
Aktivieren des Ventils (222) basierend auf den Sensordaten;
**dadurch gekennzeichnet, dass** die Steuerung (502; 702) ausgebildet ist, ein Volumen des durch die Fluidleitung (213; 913) fließenden Fluids pro Flugzyklus basierend auf der Volumenstromrate zu berechnen; und
ein zweites Volumen an Fluid zu bestimmen, das in zukünftigen Flugzyklen abzugeben ist, basierend auf dem zweiten Volumen an Fluid,
wobei der erste Durchflusssensor (230) ein Ultraschall-Durchflusssensor ist.

2. Das Rohrleitungssystem (200; 900) nach Anspruch 1, ferner umfassend einen zweiten Ultraschall-Durchflusssensor, der mit der Fluidleitung (213; 913) stromaufwärts des ersten Ultraschall-Durchflusssensors (230) gekoppelt ist.

3. Das Rohrleitungssystem (200; 900) nach Anspruch 2, wobei die Steuerung (502; 702) ferner ausgebildet ist zum:
Empfangen einer ersten Übertragungszeit von dem ersten Ultraschall-Durchflusssensor (230) zu dem zweiten Ultraschall-Durchflusssensor,
Empfangen einer zweiten Übertragungszeit von dem zweiten Ultraschall-Durchflusssensor zu dem ersten Ultraschall-Durchflusssensor (230), und
Berechnen einer Differenz der Übertragungszeit zwischen der ersten Übertragungszeit und der zweiten Übertragungszeit.

4. Das Rohrleitungssystem (200; 900) nach Anspruch 3, wobei die Steuerung (502; 702) ferner ausgebildet ist zum:
Bestimmen, ob ein Fluid durch die Fluidleitung (213; 913) fließt, basierend auf der Differenz der Übertragungszeit, und
Aktivieren des Ventils (222) als Antwort auf das Bestimmen, dass das Fluid durch die Fluidleitung (213; 913) fließt.

5. Das Rohrleitungssystem (200; 900) nach einem der vorhergehenden Ansprüche, ferner umfassend einen Vorratsbehälter (910) und eine zweite Fluidleitung, wobei der Vorratsbehälter (910) mit einem Auslass der Fluidleitung (213; 913) gekoppelt ist, wobei sich die zweite Fluidleitung von dem Vorratsbehälter (910) zu dem Ventil (222) erstreckt.

6. Das Rohrleitungssystem (200; 900) nach Anspruch 5, wenn abhängig von einem der Ansprüche 1 bis 3, wobei die Steuerung (502; 702) ferner ausgebildet ist zum:
Bestimmen eines Volumens von Abwasser, das in dem Vorratsbehälter (910) angeordnet ist, und
Aktivieren des Ventils (222) als Antwort auf das Bestimmen, dass das Volumen des Abwassers einen Volumenschwellenwert überschreitet.

7. Das Rohrleitungssystem (200; 900) nach einem der vorhergehenden Ansprüche, wobei die Steuerung (502; 702) ausgebildet ist zum:
Empfangen einer Frequenz eines Ultraschallstrahls, der von dem ersten Ultraschall-Durchflusssensor (230) ausgesendet wird,
Bestimmen, dass ein Fluid durch die Fluidleitung (213; 913) fließt, als Antwort auf eine Verschiebung der Frequenz des Ultraschallstrahls, und
Aktivieren des Ventils (222) als Antwort auf das Bestimmen, dass das Fluid durch die Fluidleitung (213; 913) fließt.

8. Ein Herstellungsgegenstand, der ein greifbares, nichtflüchtiges computerlesbares Speichermedium umfasst, auf dem Anweisungen gespeichert sind, die als Antwort auf eine Ausführung durch einen Prozessor den Prozessor veranlassen, Operationen durchzuführen, umfassend:
Empfangen, über den Prozessor, von Sensordaten von einem Durchflusssensor (230), der mit einer Fluidleitung (213; 913) gekoppelt ist;
Bestimmen, über den Prozessor, dass ein Fluid durch die Fluidleitung (213; 913) fließt, basierend zumindest teilweise auf den Sensordaten von dem Durchflusssensor (230);
Berechnen, über den Prozessor, einer Volumenstromrate basierend auf den Sensordaten, und
Aktivieren, über den Prozessor, eines Ventils (222) basierend auf den Sensordaten;
**dadurch gekennzeichnet, dass** es umfasst: Berechnen, über den Prozessor, eines Volumens an Fluid, das pro Flugzyklus durch die Fluidleitung (213; 913) fließt, basierend auf der Volumenstromrate, und
Bestimmen eines zweiten Volumens an Fluid, das in zukünftigen Flugzyklen abzugeben ist, basierend auf dem zweiten Volumen an Fluid, und
wobei der Durchflusssensor (230) ein Ultraschall-Durchflusssensor ist.

9. Der Herstellungsgegenstand nach Anspruch 8, wobei die Operationen ferner umfassen: Bestimmen, über den Prozessor, eines Volumens an Fluid, das in einem Vorratsbehälter (910) angeordnet ist, basierend auf den Sensordaten, wobei das Aktivieren des Ventils (222) ferner umfasst, das Ventil (222) als Antwort auf das Bestimmen, über den Prozessor, dass ein Volumen des Fluids in dem Vorratsbehälter (910) einen Volumenschwellenwert überschreitet, zu aktivieren, und wobei das Fluid ein Abwasser ist.

## Revendications

1. Système de plomberie (200 ; 900), comprenant :
un conduit de fluide (213 ; 913) configuré pour recevoir des eaux usées ;
un premier capteur de débit (230) couplé au conduit de fluide (213 ; 913) ;
une vanne (222) en communication fluidique avec un conduit d'évacuation (215), la vanne (222) étant configurée pour entraver un chemin fluidique du système de plomberie (200 ; 900) en réponse à son état fermé ; et
un contrôleur (502 ; 702) couplé électroniquement au premier capteur de débit (230) et à la vanne (222), le contrôleur (502 ; 702) étant configuré pour :
déterminer qu'un fluide s'écoule à travers le conduit de fluide (213 ; 913) en réponse à la réception d'une donnée de capteur provenant du premier capteur de débit (230) ;
activer la vanne (222) sur la base de la donnée de capteur ;
**caractérisé en ce que** le contrôleur (502 ; 702) est configuré pour calculer un volume de fluide s'écoulant à travers le conduit de fluide (213 ; 913) par cycle de vol sur la base du débit volumétrique ; et
déterminer un second volume de fluide à distribuer lors de cycles de vol futurs sur la base du second volume de fluide,
dans lequel le premier capteur de débit (230) est un capteur de débit à ultrasons.

2. Le système de plomberie (200 ; 900) de la revendication 1, comprenant en outre un second capteur de débit à ultrasons couplé au conduit de fluide (213 ; 913) en amont du premier capteur de débit à ultrasons (230).

3. Le système de plomberie (200 ; 900) de la revendication 2, dans lequel le contrôleur (502 ; 702) est en outre configuré pour :
recevoir un premier temps de transit du premier capteur de débit à ultrasons (230) vers le second capteur de débit à ultrasons,
recevoir un second temps de transit du second capteur de débit à ultrasons vers le premier capteur de débit à ultrasons (230), et
calculer une différence de temps de transit entre le premier temps de transit et le second temps de transit.

4. Le système de plomberie (200 ; 900) de la revendication 3, dans lequel le contrôleur (502 ; 702) est en outre configuré pour :
déterminer si un fluide s'écoule à travers le conduit de fluide (213 ; 913) sur la base de la différence de temps de transit, et
activer la vanne (222) en réponse à la détermination que le fluide s'écoule à travers le conduit de fluide (213 ; 913).

5. Le système de plomberie (200 ; 900) de l'une quelconque des revendications précédentes, comprenant en outre un réservoir de stockage (910) et un second conduit de fluide, le réservoir de stockage (910) étant couplé à une sortie du conduit de fluide (213 ; 913), le second conduit de fluide s'étendant du réservoir de stockage (910) à la vanne (222).

6. Le système de plomberie (200 ; 900) de la revendication 5, lorsqu'elle dépend de l'une quelconque des revendications 1 à 3, dans lequel le contrôleur (502 ; 702) est en outre configuré pour :
déterminer un volume d'eaux usées disposées dans le réservoir de stockage (910), et
activer la vanne (222) en réponse à la détermination que le volume d'eaux usées dépasse un seuil de volume.

7. Le système de plomberie (200 ; 900) de l'une quelconque des revendications précédentes, dans lequel le contrôleur (502 ; 702) est configuré pour :
recevoir une fréquence d'un faisceau ultrasonique émis par le premier capteur de débit à ultrasons (230),
déterminer qu'un fluide s'écoule à travers le conduit de fluide (213 ; 913) en réponse à un décalage de la fréquence du faisceau ultrasonique, et
activer la vanne (222) en réponse à la détermination que le fluide s'écoule à travers le conduit de fluide (213 ; 913).

8. Un article manufacturé comprenant un support de stockage tangible non transitoire lisible par ordinateur ayant des instructions stockées sur celui-ci qui, en réponse à une exécution par un processeur, amènent le processeur à réaliser des opérations comprenant :
la réception, via le processeur, d'une donnée de capteur provenant d'un capteur de débit (230) couplé à un conduit de fluide (213 ; 913) ;
la détermination, via le processeur, qu'un fluide s'écoule à travers le conduit de fluide (213 ; 913) sur la base, au moins en partie, de la donnée de capteur provenant du capteur de débit (230) ;
le calcul, via le processeur, d'un débit volumétrique sur la base de la donnée de capteur, et
l'activation, via le processeur, d'une vanne (222) sur la base de la donnée de capteur ;
**caractérisées par** le calcul, via le processeur, d'un volume de fluide s'écoulant à travers le conduit de fluide (213 ; 913) par cycle de vol sur la base du débit volumétrique, et
la détermination d'un second volume de fluide à distribuer lors de cycles de vol futurs sur la base du second volume de fluide, et
dans lesquelles le capteur de débit (230) est un capteur de débit à ultrasons.

9. L'article manufacturé de la revendication 8, dans lequel les opérations comprennent en outre la détermination, via le processeur, d'un volume de fluide disposé dans un réservoir de stockage (910) sur la base de la donnée de capteur, dans lequel l'activation de la vanne (222) comprend en outre l'activation de la vanne (222) en réponse à la détermination, via le processeur, qu'un volume du fluide dans le réservoir de stockage (910) dépasse un seuil de volume, et dans lequel le fluide est une eau usée.
